# FASCICULE DE BREVET EUROPEEN

(11) **EP 1 254 597 B1**
(45) Date de publication et mention de la délivrance du brevet: **16.11.2005**
(21) Numéro de dépôt: 02290930.3
(22) Date de dépôt: 12.04.2002
(51) Int. Cl.: A01K 1/06

(54) **Elément de cornadis à blocage de la barre mobile par un coulisseau**
Element eines Fressgitters zum Feststellen der beweglichen Stange mittels einer Führung
Stanchion element to block the barrier moving bar by a slide bar

(30) Priorité: 02.05.2001 FR 0105875
(43) Date de publication de la demande: 06.11.2002
(73) Titulaire: Fornes, José, 86200 Loudun (FR)
(72) Inventeur: Fornes, José, 86200 Loudun (FR)
(74) Mandataire: Nicolle, Olivier

(56) Documents cités:
- EP-A- 0 815 724
- EP-A- 1 040 753
- FR-A- 2 778 528

## Description

L'invention concerne un cornadis du type comprenant au moins un élément de structure tubulaire s'étendant dans un plan principal.

Le cornadis est une grille spéciale constituant une barrière permettant de maintenir les bêtes d'élevage en position en limitant leurs mouvements par le maintien de leur cou entre deux barres parallèles et verticales.

Chaque élément de structure comprend un cadre dans lequel une barre mobile sensiblement rectiligne est montée pivotante, sensiblement à mi-longueur, autour d'un axe perpendiculaire au plan principal.

Cette barre mobile peut dès lors prendre trois positions :
- une position d'ouverture ménageant un espace entre sensiblement la moitié supérieure de la barre mobile et le cadre, permettant ainsi à la bête de passer la tête dans l'élément de cornadis ;
- une position de fermeture dans laquelle la barre mobile est sensiblement verticale et parallèle à un élément du cadre, empêchant la bête de retirer sa tête de l'élément de cornadis ;
- une position de dégagement ménageant un espace entre sensiblement la moitié inférieure de la barre mobile et le cadre, permettant ainsi à la bête, par exemple en cas de chute, de retirer sa tête par le bas de l'élément de cornadis.

Chaque élément de cornadis permet d'accueillir une bête, le cornadis étant formé de l'assemblage dans le même plan d'autant d'éléments que de bêtes.

Dans l'art antérieur, les éléments de cornadis comprennent des moyens de blocage de la barre mobile précitée.

A titre d'exemple et tel que décrit dans le brevet FR 2 750 292 du présent déposant, la figure 1 est une vue partielle d'un élément de cornadis montrant un de ces dispositifs de blocage de la barre mobile.

Ces moyens de blocage comprennent le plus souvent une barre de commande 113 creuse montée sur une partie supérieure 103 du cadre 101 et une chape de blocage 111 fixée à l'extrémité supérieure110a de la barre mobile 110, la chape de blocage 111 venant à cheval sur la barre de commande 113.

La barre de commande 113 est mobile en rotation autour de son axe longitudinal et présente, sur sa longueur, des saillies 121, 122, 123 destinées à coopérer avec un coulisseau 115 porté par la chape de blocage 111.

La chape de blocage 111 comprend deux parois 111a, 111b sensiblement parallèles, s'étendant suivant la direction longitudinale de la barre mobile 110, dans lesquelles sont pratiqués des trous oblongs 130a, 130b en vis-à-vis, s'étendant également suivant la direction longitudinale de la barre mobile 110.

Le coulisseau 115 s'étendant entre les parois 111a, 111b de la chape de blocage 111 et étant guidé en translation dans les trous oblongs 130a, 130b, coopère sous l'effet de son propre poids avec les saillies 121, 122, 123 de la barre de commande 113 afin de bloquer la barre mobile 110 dans sa position de fermeture.

Le cornadis décrit dans le document FR 2 750 292 ne donne pas entière satisfaction.

En effet, le coulisseau 115 étant guidé en translation par les deux trous oblongs 130a, 130b, il est nécessaire que des fixations 131a, 131b, soient saillantes des faces externes de la chape de blocage 111 afin de réaliser le guidage.

Il est possible de limiter la taille de ces parties saillantes 131a, 131b mais pas de les supprimer car elles sont rendues obligatoires par l'utilisation de trous oblongs 130a, 130b débouchant comme guides de la translation du coulisseau 115.

Ces parties saillantes 131a, 131b rendent possible le soulèvement du coulisseau 115 depuis les faces externes de la chape de blocage 111 donnant la possibilité à la bête en place dans le cornadis de soulever le coulisseau 115 avec son museau et ainsi mettre l'élément de cornadis en position d'ouverture pour se libérer.

En outre, le document EP-A-1 040 753 décrit un cornadis comprenant une barre de commande présentant des encoches destinées à recevoir un arbre coulissant, permettant ainsi le blocage de la barre mobile. Dans ce document également, l'arbre coulissant présente des parties saillant des faces externes de la chape de blocage.

Le but de l'invention est de pallier ces inconvénients de l'art antérieur en fournissant un élément de cornadis muni d'un dispositif de blocage de la barre mobile plus sûr et moins onéreux à fabriquer.

L'invention vise notamment à assurer une translation précise du coulisseau en empêchant les déverrouillages intempestifs.

A cet effet, l'invention a pour objet un élément de cornadis comprenant :
- un cadre sensiblement plan ;
- une barre mobile sensiblement rectiligne et montée pivotante suivant un axe solidaire dudit cadre et sensiblement perpendiculaire au plan, de sorte que la barre mobile puisse se trouver dans deux positions extrêmes inclinées, à savoir une position d'ouverture et une position de dégagement, ainsi que dans une position intermédiaire dite de fermeture où la barre mobile est sensiblement verticale ;
- fixée rigidement à une extrémité de la barre mobile, une chape de blocage formée de deux flasques, recevant un coulisseau transversal mobile en translation dans la direction de la barre mobile ;
- une barre de commande mobile en rotation autour de son axe longitudinal pour commander les possibilités de déplacement de la barre mobile dans les trois positions précitées, cette barre de commande étant solidaire en translation de la partie supérieure du cadre et s'étendant entre les deux flasques de la chape de blocage.

Selon une définition générale de l'invention, la barre de commande comprend des moyens de blocage agencés pour coopérer avec le coulisseau de la chape de blocage, le coulisseau étant guidé en translation par des moyens de guidage situés sur la face interne de chacun des flasques.

Les faces externes de la chape de blocage sont ainsi libérées de tout dispositif de translation saillant, interdisant aux bêtes la possibilité de soulever le coulisseau.

Dans un mode de réalisation, les moyens de guidage comprennent des profilés situés sur la face interne de chacun des flasques, lesdits profilés ayant leur axe longitudinal sensiblement parallèle à l'axe longitudinal de la barre mobile.

L'utilisation de ces profilés permet d'obtenir des glissières robustes à un coût de production faible.

Plus précisément, deux profilés sont fixés sur la face interne de chacun des flasques, les deux profilés d'un même flasque étant écartés de manière que le coulisseau puisse coulisser le long de cet écart.

Ce type de guidage est d'une précision suffisante pour l'application en question.

On peut toutefois l'améliorer en prévoyant, sur le coulisseau, des butées agencées pour glisser contre les profilés en empêchant le coulisseau d'entrer en contact avec les deux flasques, empêchant ainsi son coincement lors de son mouvement de translation.

Dans un mode de réalisation particulier, le coulisseau comprend un noyau métallique et une enveloppe en polymère.

Le noyau métallique permet au coulisseau d'atteindre un poids assurant un bon fonctionnement des moyens de blocage et l'enveloppe de polymère permet d'obtenir un revêtement à faible coefficient de frottement dans laquelle on peut également former les butées décrites précédemment.

Les mesures décrites jusqu'ici permettent un guidage optimal du coulisseau et un blocage sûr de la barre mobile.

On peut également proposer une barre de commande dépourvue de soudures et assurant un meilleur verrouillage du coulisseau.

A cet effet, on prévoit un élément de cornadis du type décrit ci-dessus dans lequel les moyens de blocage portés par la barre de commande comprennent une encoche transversale agencée pour que le coulisseau puisse s'y emboîter lorsque la barre mobile et la barre de commande sont en position de fermeture.

Selon une réalisation possible, la barre de commande est pleine et réalisée en un matériau appartenant au groupe formé par l'aluminium et ses alliages.

La barre peut être réalisée en un matériau métallique résistant, léger, autre que l'acier galvanisé, en cuivre ou en bronze. La barre peut également comprendre une âme métallique et un revêtement en matière plastique.

Il en résulte en premier lieu la possibilité de fabriquer la barre de commande à partir d'un profilé plein dans lequel on usinera une rainure transversale pour former ladite encoche.

Il n'est plus nécessaire d'effectuer de soudures, la barre de commande étant de ce fait plus simple et moins onéreuse à fabriquer.

Le coulisseau peut coopérer indifféremment avec une barre de commande munie d'une encoche ou de saillies soudées, et peut être adapté à des cornadis existant.

Selon un mode de réalisation, les moyens de blocage portés par la barre de commande comprennent en outre un méplat incliné sur la barre de commande de manière à former une pente, le bas de ladite pente débouchant dans l'encoche et le haut de ladite pente étant orienté vers la position d'ouverture de la barre mobile de sorte que le coulisseau, lors du passage de la barre mobile de la position d'ouverture à la position de fermeture, puisse glisser le long de la barre de commande puis le long de la pente puis s'emboîter dans l'encoche.

Cette pente permet de faciliter le blocage de la barre mobile en obligeant le coulisseau à s'emboîter dans l'encoche.

En effet, lorsque la barre mobile est actionnée et que le coulisseau est au bas de la pente, celui-ci est alors déjà partiellement engagé dans l'encoche et, venant buter contre le flanc de l'encoche opposé au méplat, ne peut que s'emboîter.

Dans un mode de réalisation, l'élément de cornadis comprend en outre un dispositif de verrouillage de sécurité de la position de fermeture de la barre mobile, ledit dispositif étant constitué par une goupille amovible solidarisant, lorsqu'elle est en place, la chape de blocage et le cadre.

Les différents modes de réalisation peuvent également englober avantageusement des équipements de sécurité vis-à-vis des bêtes.

Notamment, la barre mobile de l'élément de cornadis selon l'invention peut comprendre en outre, vers sa partie extrême opposée à la chape de blocage, des moyens formant contrepoids aptes à ramener automatiquement la barre mobile dans sa position d'ouverture lorsqu'elle n'est pas sollicitée.

Ceci permet d'éviter les blessures ou étranglements des bêtes car le cornadis ne peut se mettre en position de fermeture que par une intervention délibérée de l'utilisateur.

Dans une variante, une barre relie ladite extrémité de la barre mobile aux moyens formant contrepoids de manière à éviter l'accrochage du collier des bêtes à la barre mobile.

Dans un autre mode de réalisation, ces moyens formant contrepoids s'étendent dans un plan parallèle au plan principal du cornadis de sorte qu'ils permettent en outre la condamnation du passage entre la partie inférieure de la barre mobile et le cadre, du côté qui n'est pas prévu pour que la bête y insère sa tête.

De même, la barre mobile peut comprendre en outre, à proximité de la chape de blocage, des moyens de condamnation du passage entre la partie supérieure de la barre mobile et le cadre, également du côté qui n'est pas prévu pour que la bête y insère sa tête.

En condamnant ainsi les ouvertures non conçues pour le passage de la tête de la bête, les risques de coincement sont fortement réduits.

Dans un autre mode de réalisation, des moyens de commande de la rotation de la barre de commande sont prévus.

En variante, on peut également prévoir un organe de fin de course en rotation, ainsi que des moyens de verrouillage en position angulaire de la barre de commande.

D'autres particularités et avantages de l'invention apparaîtront encore dans la description ci-après relative aux dessins annexés, donnés à titre d'exemples non limitatifs :

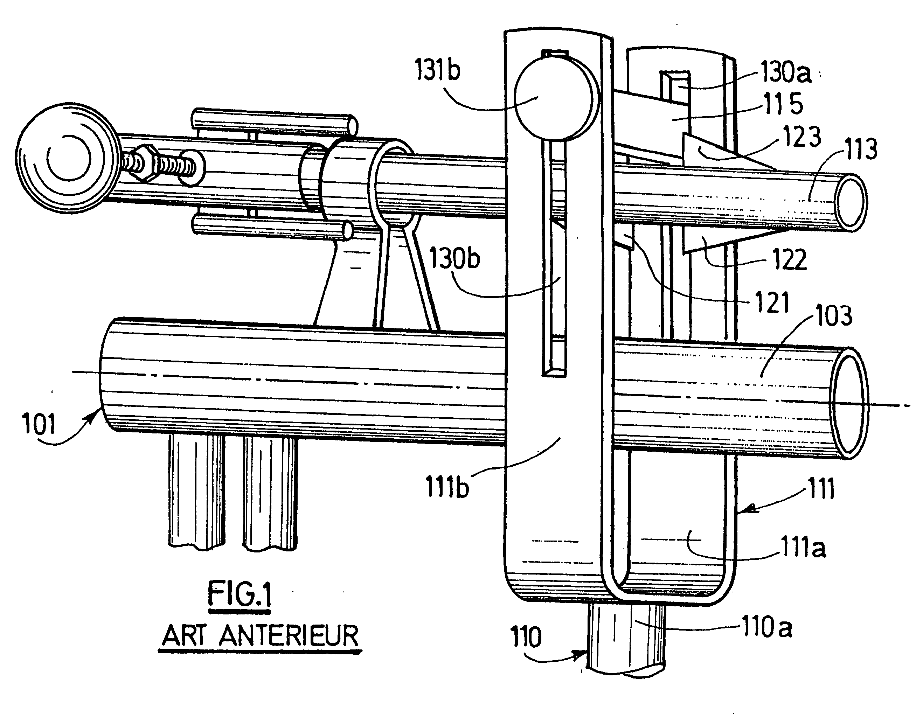

- la figure 1 est une vue partielle d'un élément de cornadis de l'art antérieur décrit précédemment ;
- la figure 2 est une vue en perspective d'un cornadis composé de plusieurs éléments de cornadis selon l'invention ;
- la figure 3 est une vue de face d'un élément de cornadis selon un mode de réalisation de l'invention ;
- la figure 4 est une vue partielle en perspective de la partie supérieure d'un élément de cornadis selon un mode de réalisation de l'invention, la barre mobile étant en position de fermeture ;
- la figure 5 est une vue partielle en perspective de l'élément de cornadis de la figure 4, la barre mobile étant en position d'ouverture ;
- la figure 6 est une vue partielle en perspective de l'élément de cornadis de la figure 4, la barre mobile étant en position d'ouverture et la barre de commande étant dans une position angulaire selon laquelle l'encoche est escamotée du trajet du coulisseau ;
- la figure 7 est une vue de dessus de la barre mobile, dans la direction de l'axe longitudinal de ladite barre.
- la figure 8 est une vue en perspective d'un mode de réalisation du coulisseau, comprenant un noyau métallique et une enveloppe, ainsi qu'un élément de fermeture ayant été ôté ;
- la figure 9 est une vue similaire à celle de la figure 8, le noyau métallique étant séparé de l'enveloppe du coulisseau, l'élément de fermeture n'étant pas représenté.

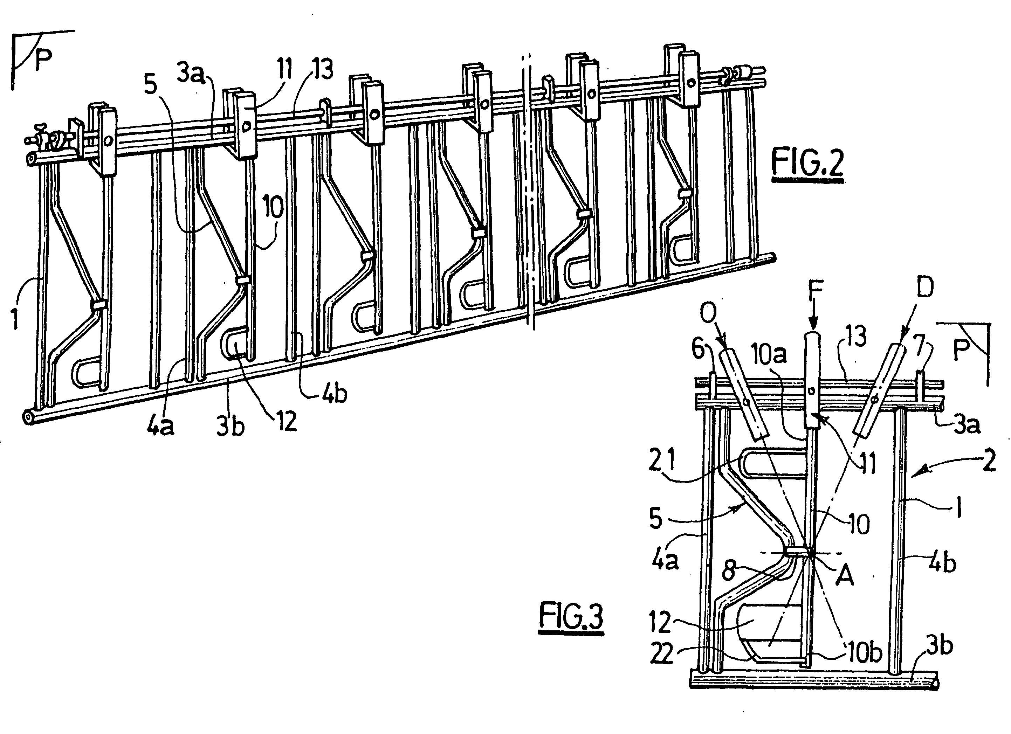

Comme représenté sur la figure 2, le cadre 1 de l'élément de cornadis 2 comprend deux longerons 3a, 3b sensiblement parallèles et deux traverses 4a, 4b sensiblement perpendiculaires aux longerons 3a, 3b et les reliant entre eux de manière rigide, les longerons et traverses s'étendant dans un même plan P.

Les longerons 3a, 3b et les traverses 4a, 4b sont des tubes creux, généralement réalisés en acier, et galvanisés.

Une barre coudée 5 est fixée rigidement au cadre 1, entre les traverses 4a, 4b et à proximité d'une de ces traverses 4a, le sommet du coude étant orienté vers l'autre traverse 4b et recevant une chape 8 destinée à assurer une liaison pivot avec la barre mobile 10 selon un axe de pivotement A sensiblement perpendiculaire au plan P.

Une barre de commande 13 est montée sur deux paliers 6, 7 solidaires du longeron supérieur 3a de manière à être sensiblement parallèle audit longeron 3a et à être mobile en rotation selon son propre axe longitudinal. Les paliers 6, 7 permettent d'empêcher le déplacement vers le haut de la barre de commande 13, notamment provoqué par les bêtes, évitant ainsi les accidents.

La barre de commande 13 est pleine, réalisée en un métal résistant, léger, et ne nécessitant pas d'être galvanisé.

Par exemple, la barre de commande 13 est réalisée en aluminium. Afin d'obtenir une résistance et un poids comparables à ceux d'une barre creuse en acier traditionnellement utilisée, on peut choisir une barre de commande en aluminium de même diamètre que la barre en acier précédemment utilisée. Le diamètre de la barre de commande est inférieur au diamètre du longeron 3a.

Ainsi, on peut monter une barre de commande 13 pleine en aluminium sur des cornadis existants, munis d'une barre de commande creuse en acier, sans qu'il soit nécessaire de changer les paliers 6, 7.

La barre en aluminium ne nécessite pas d'opération supplémentaire telle que galvanisation ou peinture, et peut être directement mise en place sur un cornadis. Sa masse est de l'ordre de 14 kg, contre un poids de 12 kg pour une barre creuse en acier.

Tel que représenté sur les figures 2 à 4, une chape de blocage 11 est fixée rigidement à la barre mobile 10, à son extrémité 10a proche de la barre de commande 13, ladite chape 11 comprenant deux flasques 11a, 11b sensiblement parallèles s'étendant suivant la direction longitudinale de la barre mobile 10 et agencées de manière à chevaucher le longeron supérieur 3a et la barre de commande 13.

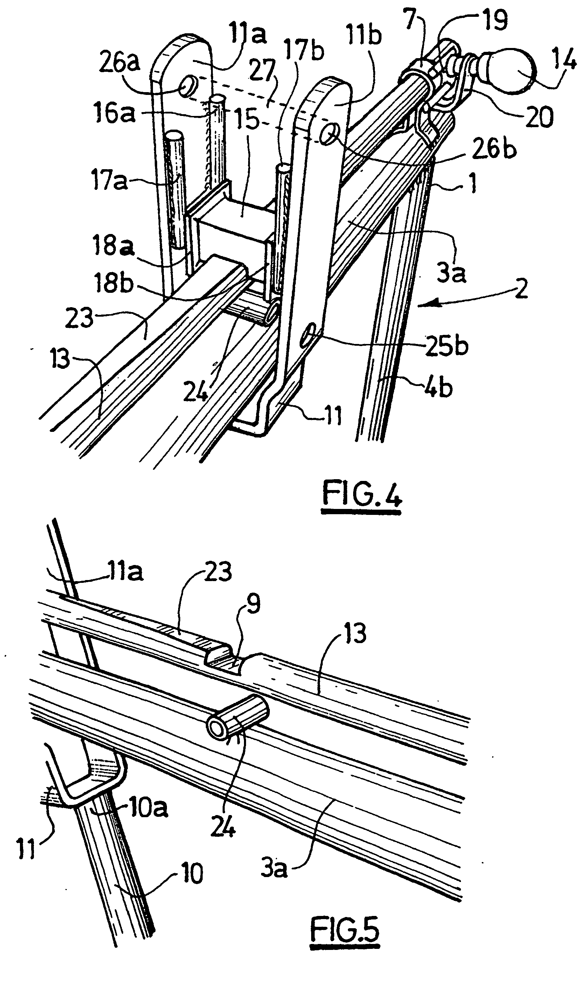

La figure 4 montre que des moyens de guidage en translation 16a, 17a, 16b, 17b sont situés sur la face interne de chacun des flasques 11a, 11b.

En effet, sur la face interne de chacun des flasques 11a, 11b, sont soudés côte à côte deux profilés 16a, 17a ; 16b, 17b, par exemple cylindriques, parallèles s'étendant suivant des axes sensiblement parallèles à la direction longitudinale de la barre mobile 10.

Un coulisseau 15 est agencé pour s'insérer dans la chape de blocage 11, entre les deux flasques 11a, 11b et, au niveau de chaque flasque, entre chaque paire de profilés cylindriques 16a, 17a ; 16b, 17b.

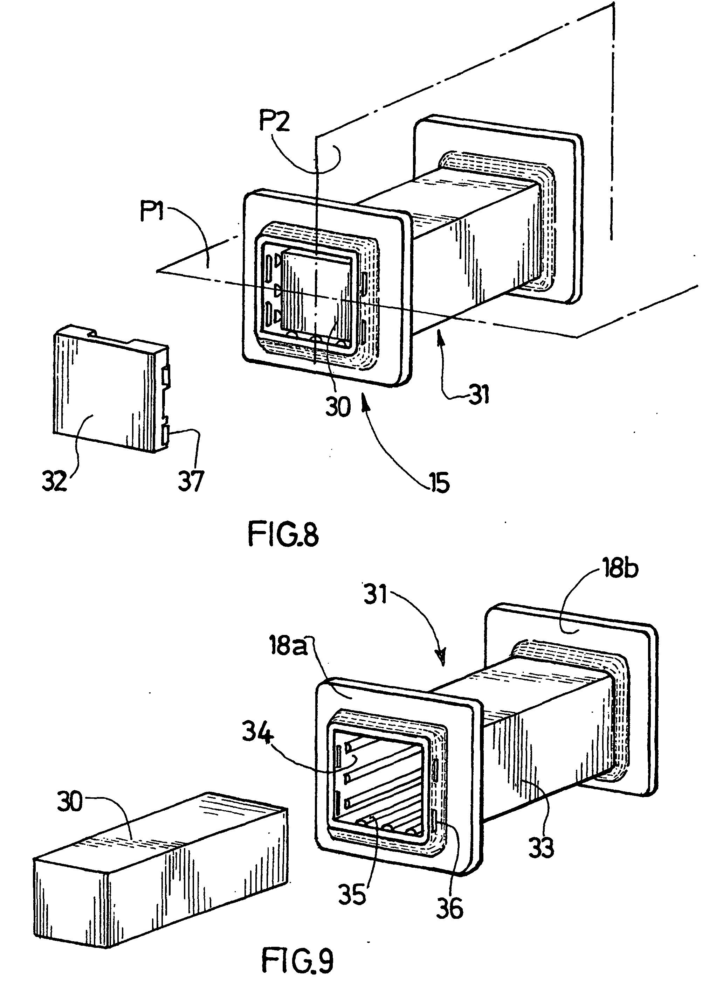

Sur chaque face interne des flasques 11a, 11b, l'écartement entre les deux profilés 16a, 17a ; 16b, 17b permet au coulisseau 15 de coulisser le long de cet écart, comme on peut le voir sur la figure 7.

Le coulisseau 15 est décrit plus en détail en référence aux figures 7 à 9.

Le coulisseau 15 comprend un noyau métallique 30 et une enveloppe 31 creuse en polymère destinée à recevoir ledit noyau 30. Cette structure en deux parties réalisées en des matériaux différents permet de s'affranchir des contraintes thermiques et d'utiliser le coulisseau 15 à des températures très différentes. Le coulisseau 15 comprend également un élément de fermeture 32.

Le noyau métallique 30 confère au coulisseau 15 un poids suffisant pour assurer sa chute entre les flasques 11a, 11b et permettre le blocage de la barre mobile 10 en position de fermeture, comme on le verra plus loin. Le noyau métallique 30 est par exemple sensiblement parallélépipédique, cette forme adaptée à la forme intérieure de l'enveloppe 31 permettant d'obtenir un meilleur blocage de la barre mobile 10.

L'enveloppe 31 est réalisée en un polymère à faible coefficient de frottement, afin d'assurer un bon glissement du coulisseau 15 le long des profilés 16a, 17a; 16b, 17b.

L'enveloppe 31 comprend une partie centrale 33 parallélépipédique, creuse, munie sur sa face intérieure 34 de saillies 35 s'étendant longitudinalement. Les saillies.35 permettent de renforcer le coulisseau 15 mais également de limiter les contraintes dues à la température.

L'enveloppe 31 comprend également, vers ses parties extrêmes, des parois planes formant butées 18a, 18b.

Le coulisseau 15 présente deux plans de symétrie longitudinaux P1, P2 sensiblement perpendiculaires entre eux, comme illustré sur la figure 8.

Enfin, l'enveloppe 31 comprend à l'une de ses extrémités des orifices 36 destinés à la fixation de l'élément de fermeture 32, qui comporte des ergots 37 complémentaires. Une réalisation possible du coulisseau 15 consiste à introduire le noyau métallique 30 dans l'enveloppe 31 puis à associer l'élément de fermeture 32 à ladite enveloppe 31 par encliquetage.

Les butées 18a, 18b sont agencées pour glisser contre les profilés cylindriques 16a, 17a, 16b, 17b en empêchant le coulisseau 15 d'entrer en contact avec les deux flasques 11a, 11b, empêchant ainsi son coincement lors de son mouvement de translation. Un jeu j est ainsi prévu entre chaque extrémité du coulisseau 15 et la face interne des flasques 11a, 11b, comme représenté sur la figure 7.

Sur la barre de commande 13, sensiblement en son milieu, est usinée une encoche 9 ayant une forme permettant au coulisseau 15 de s'y emboîter - par exemple une forme sensiblement parallélépipédique. L'encoche 9 est par exemple réalisée à l'aide d'une presse, la barre de commande 13 étant ainsi emboutie en une opération très simple et rapide. L'outil formant l'encoche est déplacé perpendiculairement à la barre de commande 13, sensiblement parallèlement au fond de l'encoche 9.

Dans la position d'ouverture O, le coulisseau 15 repose, par l'effet de son propre poids, sur la barre de commande 13.

Ainsi, lors du passage de la barre mobile 10 de la position d'ouverture O à la position de fermeture F, l'utilisateur actionne manuellement ladite barre mobile 10, le coulisseau 15 glissant le long de la barre de commande 13 jusqu'à rencontrer l'encoche 9 et s'y emboîter. Le passage de la position d'ouverture O à la position de fermeture F peut également se faire sans intervention de l'utilisateur, par simple mouvement des bêtes déplaçant leur tête vers le bas pour se nourrir dans un récipient placé au pied du cornadis à cet effet.

La position de l'encoche 9 sur la longueur de la barre de commande 13 détermine donc la position de fermeture F.

Bien que la barre de commande 13 ne présente pas d'arêtes coupantes au niveau de l'encoche 9, la répétition du mouvement de pivotement de la barre mobile, et le contact entre le coulisseau 15 et l'encoche 9 conduit à une usure de l'enveloppe 31 du coulisseau 15. Le noyau métallique 30 peut alors être apparent, et générer un bruit important lors de son glissement sur la barre de commande 13.

L'existence des deux plans de symétrie P1, P2 permet d'augmenter considérablement la durée de vie du coulisseau 15 puisque le coulisseau 15 peut être tourné sur lui-même, autour de son axe longitudinal, par quart de tour, de manière à tourner vers la barre de commande 13 une face non usée de la partie centrale 33 de l'enveloppe 31 du coulisseau 15, et ceci sans modifier le fonctionnement du cornadis.

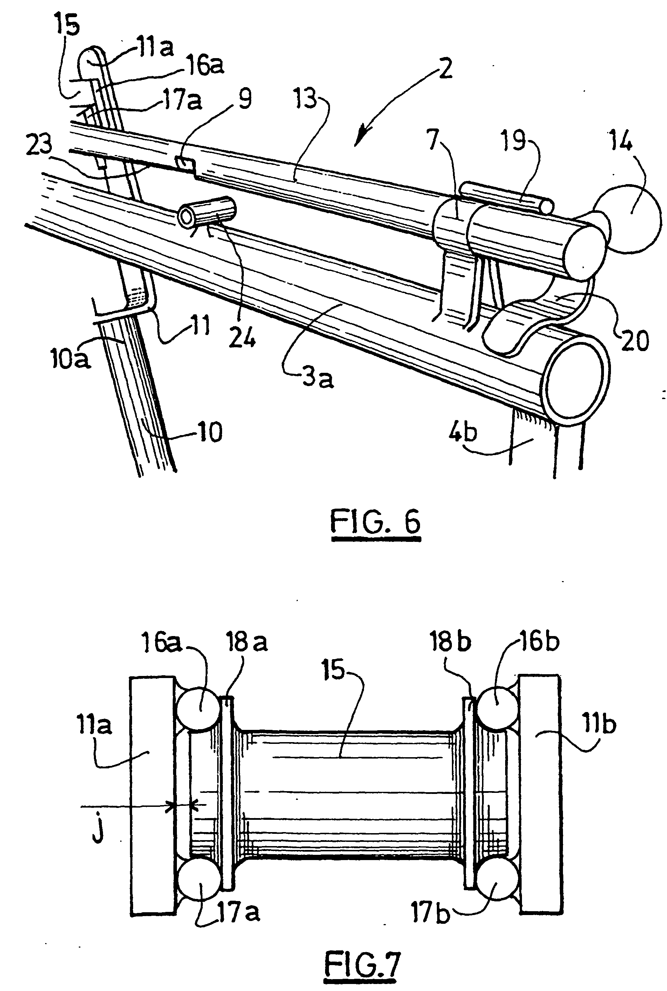

Le fait que la barre de commande 13 est mobile en rotation suivant son axe longitudinal permet à celle-ci de prendre au moins deux positions angulaires : une première position angulaire (voir figures 3 et 4) dans laquelle l'encoche 9 est tournée vers le coulisseau 15 lorsque celui-ci est à proximité permettant ainsi l'emboîtement, et une seconde position angulaire (voir figure 5) dans laquelle l'encoche 9 est escamotée du trajet du coulisseau 15 sur la barre de commande 13, la barre mobile 10 pouvant ainsi être déplacée entre la position d'ouverture O et la position de dégagement D sans être bloquée.

Des moyens de commande en rotation, par exemple une poignée 14 solidaire de la barre de commande 13, permettent à l'utilisateur de placer ladite barre dans la position angulaire souhaitée. Néanmoins, un organe 19 de fin de course en rotation limite la rotation de la barre de commande au secteur angulaire nécessaire.

Des moyens de verrouillage 20 de la position angulaire de la barre de commande 13 sont également prévus.

D'autre part, la rotation de la barre de commande 13 permet de déverrouiller la barre mobile 10 lorsque celle-ci est en position de fermeture F avec le coulisseau 15 emboîté dans l'encoche.

En effet, lors de la rotation de la barre de commande 13 et du passage de la première position angulaire à la seconde position angulaire, l'encoche 9 se dégage du coulisseau 15.

De plus, l'invention prévoit des moyens permettant d'éviter la translation du coulisseau 15 vers le haut, en dehors des flasques 11a, 11b. Ceci peut notamment se produire lorsque les bêtes donnent des coups dans le cornadis. Ces moyens, illustrés sur la figure 4, comprennent des orifices 26a, 26b pratiqués dans les flasques 11a, 11b, vers leur extrémité supérieure, ainsi qu'une entretoise 27 cylindrique creuse (représentée en pointillés) destinée à être placée sensiblement horizontalement, perpendiculairement aux flasques 11a, 11b, en correspondance avec les orifices 26a, 26b. La fixation de l'entretoise 27 à la chape 11 s'effectue via des vis - non représentées - une fois que le coulisseau 15 a été inséré entre les profilés cylindriques 16a, 17a, 16b, 17b.

Les figures 2 et 3 montrent que la barre mobile 10 comprend en outre, vers sa partie extrême 10b opposée à la chape de blocage, des moyens 12 formant contrepoids aptes à ramener automatiquement la barre mobile 10 dans sa position d'ouverture O lorsqu'elle n'est pas sollicitée.

Ces moyens formant contrepoids peuvent être une tôle 12 soudée sur la partie inférieure de la barre mobile 10 et s'étendant dans un plan parallèle au plan P, dans la direction de la barre coudée 5 afin de condamner le passage entre la partie inférieure de la barre mobile 10 et la traverse 4a située du côté de la barre coudée 5.

La condamnation de ce passage a pour but d'empêcher la bête d'y mettre sa tête, évitant ainsi les blessures.

De même, visible aussi sur la figure 3, la barre mobile 10 comprend également vers sa partie supérieure 10a, à proximité de la chape de blocage 11, des moyens 21 de condamnation du passage entre la barre mobile 10 et la traverse 4a située du côté de la barre coudée 5.

Les bêtes doivent également être protégées contre l'accrochage de leur collier à l'extrémité inférieure 10b de la barre mobile 10. Pour cela, une barre 22 soudée relie ladite extrémité de la barre mobile 10 à la tôle 12 formant contrepoids (voir figure 3).

Tel que montré par les figures 4 et 5 et pour améliorer l'emboîtement du coulisseau 15 dans l'encoche 9, un méplat incliné 23 est prévu sur la barre de commande 13 de manière à former une pente, le bas de ladite pente 23 débouchant dans l'encoche 9 et le haut de ladite pente 23 étant orienté vers la position d'ouverture O de la barre mobile 10 de sorte que le coulisseau 15, lors du passage de la barre mobile 10 de la position d'ouverture O à la position de fermeture F, glisse le long de la barre de commande 13 puis le long de la pente 23 puis s'emboîte dans l'encoche 9. Le méplat peut également être réalisé à l'aide d'une presse.

Dans le présent mode de réalisation et suite à des essais, les valeurs suivantes ont été retenues pour assurer un bon fonctionnement du blocage de la barre mobile 10 :
- distance entre les deux faces internes des flasques 11a, 11b : 80 mm
- longueur du coulisseau 15 : 74 mm
- espace entre les profilés cylindriques 16a, 17a ; 16b, 17b d'une même face interne des flasques 11 a, 11 b : 31 mm
- largeur du coulisseau 15 : 30 mm
- masse du coulisseau 15 : de 300 g à 350 g
- diamètre de la barre de commande 13 : 28 mm
- largeur de l'encoche 9 (dans le sens longitudinal de la barre de commande 13) : 30,5 mm
- profondeur de l'encoche 9 (dans le sens radial de la barre de commande 13) : 14 mm (on usine la barre 13 jusqu'à mi-diamètre)
- longueur de la pente 23 (dans le sens longitudinal de la barre de commande 13) : 150 mm
- dénivelé de la pente 23 : 4 mm.

L'élément de cornadis selon l'invention peut aussi comprendre un dispositif de verrouillage de sécurité de la position de fermeture F de la barre mobile 10, bien visible sur les figures 4 et 5, ledit dispositif comprenant une goupille amovible (non représentée) s'introduisant dans un manchon 24 solidaire du cadre 1 et dans des trous 25a, 25b pratiqués dans les flasques 11a, 11b, ladite goupille solidarisant, lorsqu'elle est en place, la chape de blocage 11 et le cadre 1.

## Revendications

1. Elément de cornadis (2) comprenant :
- un cadre (1) sensiblement plan (P) ;
- une barre mobile (10) sensiblement rectiligne et montée pivotante suivant un axe (A) solidaire dudit cadre (1) et sensiblement perpendiculaire au plan (P), de sorte que la barre mobile (10) puisse se trouver dans deux positions extrêmes inclinées, à savoir une position d'ouverture (0) et une position de dégagement (D), ainsi que dans une position intermédiaire dite de fermeture (F) où la barre mobile (10) est sensiblement verticale ;
- une chape de blocage (11) formée de deux flasques (11a, 11b) et fixée rigidement à une extrémité (10a) de la barre mobile (10), ladite chape de blocage (11) recevant un coulisseau (15) transversal mobile en translation dans la direction de la barre mobile (10) ;
- une barre de commande (13) mobile en rotation autour de son axe longitudinal pour commander les possibilités de déplacement de la barre mobile (10) dans les trois positions (O, F, D) précitées, cette barre de commande (13) étant solidaire en translation de la partie supérieure (3a) du cadre et s'étendant entre les deux flasques (11 a, 11 b) de la chape de blocage (11) ;
la barre de commande (13) comprenant des moyens de blocage agencés pour coopérer avec le coulisseau (15) de la chape de blocage (11),
**caractérisé en ce que** ledit coulisseau (15) est guidé en translation par des moyens de guidage situés sur la face interne de chacun des flasques (11a, 11b).

2. Elément de cornadis selon la revendication 1, **caractérisé en ce que** le coulisseau (15) comprend un noyau métallique (30) et une enveloppe (31) en polymère.

3. Elément de cornadis selon la revendication 2, **caractérisé en ce que** le noyau (30) est sensiblement parallélépipédique.

4. Elément de cornadis selon la revendication 2 ou 3, **caractérisé en ce que** l'enveloppe (31) comprend une partie centrale (33) parallélépipédique, creuse, munie sur sa face intérieure (34) de saillies (35) longitudinales.

5. Elément de cornadis selon l'une quelconque des revendications 1 à 4, **caractérisé en ce que** le coulisseau (15) présente deux plans de symétrie (P1, P2) longitudinaux perpendiculaires entre eux.

6. Elément de cornadis selon l'une quelconque des revendications 1 à 5, **caractérisé en ce que** les moyens de guidage en translation du coulisseau (15) comprennent des profilés (16a, 17a, 16b, 17b) situés sur la face interne de chacun des flasques (11 a, 11 b), lesdits profilés ayant leur axe longitudinal sensiblement parallèle à l'axe longitudinal de la barre mobile (10).

7. Elément de cornadis selon la revendication 6, **caractérisé en ce que** deux profilés (16a, 17a ; 16b, 17b) sont fixés sur la face interne de chacun des flasques (11a, 11b), les deux profilés d'un même flasque (11a, 11b) étant écartés de manière que le coulisseau (15) puisse coulisser le long de cet écart.

8. Elément de cornadis selon la revendication 6 ou 7, **caractérisé en ce que** le coulisseau (15) comprend en outre des butées (18a, 18b) agencées pour glisser contre les profilés (16a, 17a, 16b, 17b) en empêchant le coulisseau (15) d'entrer en contact avec les deux flasques (11a, 11b), empêchant ainsi son coincement lors de son mouvement de translation.

9. Elément de cornadis selon l'une quelconque des revendications précédentes, **caractérisé en ce que** les moyens de blocage portés par la barre de commande (13) comprennent une encoche transversale (9) agencée pour que le coulisseau (15) puisse s'y emboîter lorsque la barre mobile (10) et la barre de commande (13) sont en position de fermeture (F).

10. Elément de cornadis selon l'une quelconque des revendications précédentes, **caractérisé en ce que** la barre de commande (13) est pleine et réalisée en un matériau appartenant au groupe formé par l'aluminium et ses alliages.

11. Elément de cornadis selon la revendication 9 ou 10, **caractérisé en ce que** lesdits moyens de blocage portés par la barre de commande (13) comprennent en outre un méplat incliné (23) sur la barre de commande (13) de manière à former une pente, le bas de ladite pente (23) débouchant dans l'encoche (9) et le haut de ladite pente (23) étant orienté vers la position d'ouverture (O) de la barre mobile (10) de sorte que le coulisseau (15), lors du passage de la barre mobile (10) de la position d'ouverture (O) à la position de fermeture (F), puisse glisser le long de la barre de commande (13) puis le long de la pente (23) puis s'emboîter dans l'encoche (9).

12. Elément de cornadis selon l'une quelconque des revendications précédentes, **caractérisé en ce qu'**il comprend en outre un dispositif de verrouillage de sécurité (24, 25a, 25b) de la position de fermeture (F) de la barre mobile (10), ledit dispositif étant constitué par une goupille amovible solidarisant, lorsqu'elle est en place, la chape de blocage (11) et le cadre (1).

13. Elément de cornadis selon l'une quelconque des revendications précédentes, **caractérisé en ce que** la barre mobile (10) comprend en outre, vers sa partie extrême (10b) opposée à la chape de blocage, des moyens (12) formant contrepoids aptes à ramener automatiquement la barre mobile (10) dans sa position d'ouverture (O) lorsqu'elle n'est pas sollicitée.

14. Elément de cornadis selon la revendication 13, **caractérisé en ce qu'**une barre (22) relie ladite extrémité de la barre mobile (10) aux moyens (12) formant contrepoids.

15. Elément de cornadis selon la revendication 13 ou 14, **caractérisé en ce que** les moyens (12) formant contrepoids s'étendent dans un plan parallèle au plan (P) de sorte qu'ils permettent en outre la condamnation du passage entre la partie inférieure de la barre mobile (10) et le cadre (1).

16. Elément de cornadis selon l'une quelconque des revendications précédentes, **caractérisé en ce que** la barre mobile (10) comprend en outre, à proximité de la chape de blocage (11), des moyens (21) de condamnation du passage entre la partie supérieure de la barre mobile (10) et le cadre (1).

17. Elément de cornadis selon l'une quelconque des revendications précédentes, **caractérisé en ce qu'**il comprend en outre des moyens (14) de commande de la rotation de la barre de commande (13).

18. Elément de cornadis selon l'une quelconque des revendications précédentes, **caractérisé en ce qu'**il comprend en outre un organe (19) de fin de course en rotation de la barre de commande (13).

19. Elément de cornadis selon l'une quelconque des revendications précédentes, **caractérisé en ce qu'**il comprend en outre des moyens (20) de verrouillage en position angulaire de la barre de commande (13).

## Patentansprüche

1. Fressgitterelement (2) mit:
- einem deutlich ebenen (P) Rahmen (1);
- einer deutlich geradlinigen und schwenkbar gemäß einer mit dem genannten Rahmen (1) fest befestigten Achse (A) angebrachten zur Ebene (P) deutlich lotrechten mobilen Stange (10), so dass die mobile Stange (10) sich in zwei geneigten Endpositionen befinden kann, nämlich einer Öffnungsposition (0) und einer Freisetzungsposition (D), sowie in einer als geschlossenen Position bezeichneten Zwischenposition (F), in der die mobile Stange (10) deutlich vertikal ist;
- ein aus zwei Flanschen (11a, 11 b) gebildeter und an einem Ende (10a) der mobilen Stange (10) befestigter Blockierbügel (11), wobei der genannte Blockierbügel (11) einen transversalen in Translation in der Richtung der mobilen Stange (10) mobilen Schlitten (15) aufnimmt;
- eine in Rotation um ihre Längsachse mobile Steuerstange (13) zur Steuerung der Verschiebungsmöglichkeiten der mobilen Stange (10) in den drei vorgenannten Positionen (O, F, D), wobei diese Steuerstange (13) in Translation mit dem oberen Teil (3a) des Rahmens fest verbunden ist und sich zwischen den beiden Flanschen (11a, 11 b) des Blockierbügels (11) erstreckt;
wobei die Steuerstange (13) zum Zusammenwirken mit dem Schlitten (15) des Blockierbügels (11) angeordnete Blockiermittel umfasst,
**dadurch gekennzeichnet, dass** der genannte Schlitten (15) in Translation durch sich auf der Innenseite jedes der Flansche (11a, 11b) befindenden Führungsmittel geführt wird.

2. Fressgitterelement gemäß Anspruch 1, **dadurch gekennzeichnet, dass** der Schlitten (15) einen Metallkern (30) und eine Ummantelung (31) aus Polymer umfasst.

3. Fressgitterelement gemäß Anspruch 2, **dadurch gekennzeichnet, dass** der Kern (30) deutlich parallelflach ist.

4. Fressgitterelement gemäß Anspruch 2 oder 3, **dadurch gekennzeichnet, dass** die Ummantelung (31) einen zentralen parallelflachen hohlen, an seinen Innenseite (34) mit länglichen Vorsprüngen (35) versehenen Teil (33) umfasst.

5. Fressgitterelement gemäß Anspruch 1 bis 4, **dadurch gekennzeichnet, dass** der Schlitten (15) zwei längliche und zueinander lotrechte Symmetrieebenen (P1, P2) aufweist.

6. Fressgitterelement gemäß Anspruch 1 bis 5, **dadurch gekennzeichnet, dass** die Führungsmittel in Translation des Schlittens (15) sich auf der Innenseite jedes Flansches (11a, 11b) befindende Profile (16a, 17a, 16b, 17b) umfassen, wobei die genannten Profile ihre Längsachse deutlich parallel zur Längsachse der mobilen Stange (10) haben.

7. Fressgitterelement gemäß Anspruch 6, **dadurch gekennzeichnet, dass** zwei Profile (16a, 17a; 16b, 17b) auf der Innenseite jedes Flansches (11a, 11b) befestigt sind, wobei die beiden Profile ein und desselben Flansches (11a, 11b) derart beabstandet sind, dass der Schlitten (15) entlang dieses Abstandes gleiten kann.

8. Fressgitterelement gemäß Anspruch 6 oder 7, **dadurch gekennzeichnet, dass** der Schlitten (15) darüber hinaus zum Gleiten gegen die Profile (16a, 17a, 16b, 17b) angeordnete Anschläge (18a, 18b) umfasst, indem der Schlitten (15) daran gehindert wird, mit den beiden Flanschen (11a, 11 b) in Kontakt zu treten, wobei somit sein Festklemmen bei seiner Translationsbewegung verhindert wird.

9. Fressgitterelement gemäß einem der vorherigen Ansprüche, **dadurch gekennzeichnet, dass** die von der Steuerstange (13) getragenen Blockiermittel eine transversale Einkerbung (9) umfassen, die angeordnet ist, damit der Schlitten (15) dort einrasten kann, wenn die mobile Stange (10) und die Steuerstange (13) in geschlossener Position (F) sind.

10. Fressgitterelement gemäß einem der vorherigen Ansprüche, **dadurch gekennzeichnet, dass** die Steuerstange (13) massiv und aus einem zur aus Aluminium und seinen Legierungen gebildeten Gruppe gehörenden Material realisiert ist.

11. Fressgitterelement gemäß Anspruch 9 oder 10, **dadurch gekennzeichnet, dass** die genannten von der Steuerstange (13) getragenen Blockiermittel darüber hinaus eine geneigte Abflachung (23) auf der Steuerstange (13) umfassen, so dass eine Neigung gebildet wird, wobei der untere Teil der genannte Neigung (23) in die Einkerbung (9) einmündet und der obere Teil der genannten Neigung (23) zur Öffnungsposition (O) der mobilen Stange (10) ausgerichtet ist, so dass der Schlitten (15) beim Durchgang der mobilen Stange (10) von der Öffnungsposition (O) in die geschlossene Position (F) entlang der Steuerstange (13), dann entlang der Neigung (23) gleiten kann und dann in die Einkerbung (9) einrasten.

12. Fressgitterelement gemäß einem der vorherigen Ansprüche, **dadurch gekennzeichnet, dass** es darüber hinaus eine Sicherheitsverriegelungsvorrichtung (24, 25a, 25b) der geschlossenen Position (F) der mobilen Stange (10) umfasst, wobei die genannte Vorrichtung durch einen abnehmbaren Stift gebildet wird, der, wenn er eingesetzt ist, den Blockierbügel (11) und den Rahmen (1) fest miteinander verbindet.

13. Fressgitterelement gemäß einem der vorherigen Ansprüche, **dadurch gekennzeichnet, dass** die mobile Stange (10) darüber hinaus zu ihrem dem Blockierbügel entgegen gesetzten Endteil (10b) zum automatischen Zurückholen der mobilen Stange (10) in ihre Öffnungsposition (O) geeignete Gegengewichte bildende Mittel (12) umfasst, wenn diese nicht angesprochen wird.

14. Fressgitterelement gemäß Anspruch 13, **dadurch gekennzeichnet, dass** eine Stange (22) das genannte Ende der mobilen Stange (10) mit den Gegengewichte bildenden Mitteln (12) verbindet.

15. Fressgitterelement gemäß Anspruch 13 oder 14, **dadurch gekennzeichnet, dass** die Gegengewichte bildenden Mittel (12) sich in einer zur Ebene (P) parallelen Ebene erstrecken, so dass sie darüber hinaus die Blockierung des Durchgangs zwischen dem unteren Teil der mobilen Stange (10) und dem Rahmen (1) erlauben.

16. Fressgitterelement gemäß einem der vorherigen Ansprüche, **dadurch gekennzeichnet, dass** die mobile Stange (10) darüber hinaus in der Nähe des Blockierungsbügels (11) Mittel (21) zur Verrieglung des Durchgangs zwischen dem oberen Teil der mobilen Stange (10) und dem Rahmen (1) umfassen.

17. Fressgitterelement gemäß einem der vorherigen Ansprüche, **dadurch gekennzeichnet, dass** es darüber hinaus Steuermittel (14) der Rotation der Steuerstange (13) umfasst.

18. Fressgitterelement gemäß einem der vorherigen Ansprüche, **dadurch gekennzeichnet, dass** es darüber hinaus ein Endstellungsorgan (19) in Rotation der Steuerstange (13) umfasst.

19. Fressgitterelement gemäß einem der vorherigen Ansprüche, **dadurch gekennzeichnet, dass** es darüber hinaus Verriegelungsmittel (20) in der Winkelposition der Steuerstange (13) umfasst.

## Claims

1. A head gate element (2) comprising:
- a substantially planar (P) frame (1);
- a substantially rectilinear movable bar (10) mounted so as to pivot on an axis (A) fixed to said frame (1) and substantially perpendicular to the plane (P) so that the movable bar (10) can be situated in two inclined extreme positions, namely an open position (O) and a release position (D) as well as in an intermediate so-called closed position (F) where the movable bar (10) is substantially vertical;
- a locking stirrup (11) formed by two flanges (11a, 11 b) and fixed rigidly to one end (10a) of the movable bar (10), the said locking stirrup (11) receiving a transverse slide (15) able to move in translation in the direction of the movable bar (10);
- a control bar (13) able to move in rotation about its longitudinal axis in order to control the possibilities of movement of the movable bar (10) into the aforementioned three positions (O, F, D), this control bar (13) being fixed in translation to the top part (3a) of the frame and extending between the two flanges (11 a, 11 b) of the locking stirrup (11);
the control bar (13) comprising locking means arranged so as to cooperate with the slide (13) of the locking stirrup (11)
**characterised in that** the said slide (15) is guided in translation by a guide means situated on the internal face of each of the flanges (11 a, 11 b).

2. Head gate element according to Claim 1, **characterised in that** the slide (15) comprises a metallic core (30) and a polymer envelope (31).

3. Head gate element according to Claim 2, **characterised in that** the core (30) is substantially parallelepipedal.

4. A head gate element according to Claim 2 or 3, **characterised in that** the envelope (31) comprises a hollow parallelepipedal central part (33) provided on its internal face (34) with longitudinal projections (35).

5. A head gate element according to any one of Claims 1 to 4, **characterised in that** the slide (15) has two longitudinal planes of symmetry (P1, P2) perpendicular to each other.

6. A head gate element according to any one of Claims 1 to 5, **characterised in that** the means of guiding the slide (15) in translation comprise profiled sections (16a, 17a, 16b, 17b) situated on the internal face of each of the flanges (11a, 11 b), the said profiled sections having their longitudinal axis substantially parallel to the longitudinal axis of the movable bar (10).

7. A head gate element according to Claim 6, **characterised in that** two profiled sections (16a, 17a; 16b, 17b) are fixed to the internal face of each of the flanges (11 a, 11 b), the two profiled sections on the same flange (11 a, 11 b) being separated so that the slide (15) can slide along this separation.

8. A head gate element according to Claim 6 or 7, **characterised in that** the slide (15) also comprises stops (18a, 18b) arranged so as to slide against the profiled sections (16a, 17a, 16b, 17b) preventing the slide (15) from coming into contact with the two flanges (11a, 11 b), thus preventing its wedging during its translation movement.

9. A head gate element according to any one of the preceding claims, **characterised in that** the locking means carried by the control bar (13) comprise a transverse notch (9) arranged so that the slide (15) can nest therein when the movable bar (10) and the control bar (13) are in the closed position (F).

10. A head gate element according to any one of the preceding claims, **characterised in that** the control bar (13) is solid and produced from a material belonging to the group formed by aluminium and its alloys.

11. A head gate element according to Claim 9 or 10, **characterised in that** the said locking means carried by the control bar (13) also comprise an inclined flap (23) on the control bar (13) so as to form a slope, the bottom of the said slope (23) emerging in the notch (9) and the top of the said slope (23) being oriented towards the open position (O) of the movable bar (10) so that the slide (15), when the movable bar (10) passes from the open position (O) to the closed position (F), can slide along the control bar (13) and then along the slope (23) and then nest in the notch (9).

12. A head gate element according to any one of the preceding claims, **characterised in that** it also comprises a safety locking device (24, 25a, 25b) for the closed position (F) of the movable bar (10), the said device consisting of a removable pin fixing together, when it is in place, the locking stirrup (11) and the frame (1).

13. A head gate element according to any one of the preceding claims, **characterised in that** the movable bar (10) also comprises, towards its end part (10b) opposite to the locking stirrup, means (12) forming a counterweight able to automatically return the movable bar (10) into its open position (O) when it is not acted on.

14. A head gate element according to Claim 13, **characterised in that** a bar (22) connects the said end of the movable bar (10) to the means (12) forming a counterweight.

15. A head gate element according to Claim 13 or 14, **characterised in that** the means (12) forming a counterweight lying in a plane parallel to the plane (P) so that they also make it possible to block the passage between the bottom part of the movable bar (10) and the frame (1).

16. A head gate element according to any one of the preceding claims, **characterised in that** the movable bar (10) also comprises, close to the locking stirrup (11), means (21) blocking the passage between the top part of the movable bar (10) and the frame (1).

17. A head gate element according to any one of the preceding claims, **characterised in that** it also comprises means (14) of controlling the rotation of the control bar (13).

18. A head gate element according to any one of the preceding claims, **characterised in that** it also comprises a member (19) for the rotational end of travel of the control bar (13).

19. A head gate element according to any one of the preceding claims, **characterised in that** it also comprises means (20) for the angular locking in position of the control bar (13).
